# FASCICULE DE BREVET EUROPEEN

(11) **EP 4 006 515 B1**
(45) Date de publication et mention de la délivrance du brevet: **01.04.2026**
(21) Numéro de dépôt: 21210503.5
(22) Date de dépôt: 25.11.2021
(51) Int. Cl.: G01L 1/14, B60N 2/00, B60R 21/015, G01G 19/414, G01G 7/06

(54) **PROCÉDÉ DE DÉTERMINATION DE L'ÉTAT D'OCCUPATION D'UN SIÈGE ET SYSTÈME DE DÉTERMINATION CORRESPONDANT**
VERFAHREN ZUR BESTIMMUNG DES BESETZUNGSZUSTANDS EINES SITZES UND ENTSPRECHENDES BESTIMMUNGSSYSTEM
METHOD FOR DETERMINING THE STATE OF OCCUPANCY OF A SEAT AND CORRESPONDING DETERMINATION SYSTEM

(30) Priorité: 27.11.2020 FR 2012255
(43) Date de publication de la demande: 01.06.2022
(73) Titulaire: FAURECIA Sièges d'Automobile, 92000 Nanterre (FR)
(72) Inventeur: BAUDU, Samuel, 92100 Boulogne Billancourt (FR); BALDE, Mamadou, 91150 Morigny-Champigny (FR); LE ROUX, Stéphane, 91510 Lardy (FR); ROUCHOU, Mohamed, 91260 Juvisy Sur Orges (FR)
(74) Mandataire: Novagraaf Group

(56) Documents cités:
- WO-A1-2013/030009
- WO-A1-2019/172063
- US-A1- 2006 033 507
- US-B1- 6 392 550

## Description

### Domaine technique

La présente demande concerne un procédé de détermination de l'état d'occupation d'un siège et système de détermination correspondant

### Etat de la technique antérieure

Le document US 2006/033507 divulgue un système de détection de la présence d'un occupant dans un siège de véhicule comprenant des capteurs capacitifs 20 portés par le siège. Les capteurs capacitifs comportent deux électrodes disposées sur un écran conducteur 22. La mesure des valeurs de capacité est réalisée en alimentant successivement qu'une première électrode, puis que la deuxième électrode, et enfin en alimentant les deux électrodes et en observant les variations de capacité entre ces mesures.

Aucun des capteurs capacitifs utilisés dans ce système n'est un capteur capacitif interdigité. Ce document ne divulgue ni ne suggère de calculer une différence entre une valeur de capacité résultante et une valeur de capacité de référence et une comparaison de la différence calculée à une valeur seuil.

Le document US 6 392 550 décrit une méthode de détection du degré de vigilance ou de somnolence d'un conducteur en mesurant la variation de pression sur des capteurs disposés sur le siège. Ses variations de pression permettent de savoir si le conducteur est affalé, penché ou debout dans son siège. Ce système utilise une technique de traitement de données utilisant un réseau de neurones.

Le document WO 2019/172063 décrit une méthode pour réaliser des exercices de gymnastique (torsion du torse, mouvement des jambes...) sur un siège de véhicule automobile. A cet effet, le siège est équipé de capteurs de pression. Un téléphone mobile équipé d'une application spécifique est connecté au véhicule. Les capteurs de pression permettent de vérifier que le conducteur effectue correctement les actions demandées. Pour cela, les valeurs mesurées par les capteurs de pression sont comparées à des valeurs seuils préenregistrées.

Les procédés décrits dans le document US 6 392 550 et dans WO 2019/172063 ne mettent en œuvre aucune des étapes du procédé revendiqué dans la présente invention. De plus, les capteurs pour la mise en oeuvre de ce procédé ne sont pas des capteurs capacitifs interdigités.

Il existe une demande croissante de dispositifs de détermination d'un état d'occupation d'un siège de véhicule automobile, qu'il s'agisse d'un conducteur ou d'un passager.

Généralement, ces dispositifs de détermination mettent en œuvre des capteurs tels que par exemple une caméra ou un capteur de mouvement situé au-dessus du siège. Cependant, les mesures obtenues par de tels dispositifs sont obtenues avec un temps de réponse généralement élevé, de l'ordre de plusieurs secondes, ce qui est inapproprié pour fournir des données de manière suffisamment rapide dans certaines situations, notamment en cas d'accident.

Par exemple, il existe un besoin de pouvoir adapter les propriétés d'un dispositif d'airbag destiné à protéger un utilisateur occupant un siège de véhicule en cas d'accident. Ainsi, le fonctionnement des dispositifs connus pourrait être amélioré en ajustant les propriétés d'un airbag et/ou d'un prétensionneur de ceinture de sécurité d'un siège de véhicule à partir d'une connaissance, en temps réel, de paramètres tels que la position exacte de l'utilisateur dans le siège, le type d'utilisateur, sa taille, son poids, etc.

De plus, les mesures obtenues par de tels dispositifs manquent souvent de robustesse car ceux-ci tolèrent difficilement les perturbations qui pourraient les affecter. En outre, les mesures réalisées par ces dispositifs présentent une dérive au cours du temps. Ces dispositifs sont donc inappropriés à une application dans le domaine automobile dans laquelle une durée de fiabilité d'au moins dix ans est requise.

### Résumé de l'invention

Afin de répondre aux inconvénients précités ainsi qu'à ce ou à ces besoins, la présente divulgation concerne en premier lieu un procédé de détermination de l'état d'occupation d'un siège d'un véhicule automobile, le procédé étant mis en œuvre par un système de détermination comprenant un siège au moins six capteurs capacitifs interdigités portés par le siège, et un contrôleur connecté aux capteurs capacitifs interdigités, ledit contrôleur comprenant une mémoire comportant une base de données, ladite base de données comportant au moins une valeur de capacitance de référence et une valeur seuil pour chaque capteur capacitif interdigité, le procédé comportant une étape mesure d'au moins trois valeurs de capacitance par chaque capteur capacitif interdigité , les étapes suivantes étant mises en œuvre par le contrôleur pour les valeurs de capacitance mesurées par chaque capteur capacitif interdigité :
- calcul d'une valeur de capacitance moyenne à partir d'au moins deux valeurs de capacitance mesurées,
- calcul de la différence entre la valeur de capacitance moyenne et la valeur de capacitance de référence,
- comparaison de la différence calculée à la valeur seuil,
- détermination de l'état d'occupation du siège en fonction du résultat de ladite comparaison.

Selon un mode de réalisation, le procédé comporte en outre une étape de détermination d'une valeur de capacitance minimum et d'une valeur de capacitance maximum parmi les valeurs de capacitance mesurées, et dans lequel l'étape de calcul de la valeur de capacitance moyenne est une étape de calcul d'une valeur de capacitance moyenne à partir de la valeur de capacitance minimum et de la valeur de capacitance maximum.

Selon un mode de réalisation, la base de données comporte en outre des premières plages de variation de capacitance définies pour les capteurs capacitifs interdigités, chaque première plage de variation étant définie pour un capteur capacitif interdigité, les premières plages de variation étant représentative d'un état occupé par une personne humaine, et le procédé comporte en outre pour chaque capteur capacitif interdigité, une étape de comparaison de la différence calculée à la première plage de variation, l'état d'occupation déterminé étant un état occupé par une personne humaine, lorsque les différences calculées pour chaque capteur capacitif interdigité sont comprises dans les premières plages de variation.

Selon un mode de réalisation, la base de données comporte en outre au moins deux sous-domaines de variation de capacitance définis pour chaque capteur capacitif interdigité, chaque sous-domaines de variation de capacitance étant représentatif d'un type morphologique d'une personne, et le procédé comporte les étapes suivantes :
- comparaison des différences calculées aux au moins deux sous domaines de variation de capacitance; et
- détermination d'un type morphologique de la personne assise sur le siège en fonction du résultat de ladite comparaison.

Selon un mode de réalisation, la base de données comporte en outre des deuxièmes plages de variation de capacitance définies pour les capteurs capacitifs interdigités, chaque deuxième plage de variation étant définie pour un capteur de capacitance, les deuxièmes plages de variation étant représentative d'un état occupé par une chose, un animal ou un enfant, et le procédé comporte en outre pour chaque capteur capacitif interdigité, une étape de comparaison de la différence calculée à la deuxième plage de variation, l'état d'occupation déterminé étant un état occupé par une chose, un animal ou un enfant, lorsque les valeurs de capacitance moyennes calculées pour chaque capteur capacitif interdigité sont comprises dans les deuxièmes plages de variation de capacitance.

Selon un mode de réalisation, la base de données comporte en outre au moins deux sous-domaines de variation de capacitance définis pour les capteurs capacitifs interdigités et respectivement, chaque sous-domaine de variation de capacitance étant représentatif d'une plage de valeurs d'âge d'enfant, et le procédé comporte en outre les étapes suivantes :
- comparaison des différences calculées aux au moins deux sous domaines de variation de capacitance, et
- détermination d'une plage de valeurs d'âge d'enfant en fonction du résultat de la comparaison.

Selon un mode de réalisation, l'étape de mesure est mise en œuvre à chaque fois qu'une portière du véhicule automobile est ouverte ou est déverrouillée.

Selon un mode de réalisation, l'étape de mesure est mise en œuvre à chaque fois qu'une portière du véhicule automobile est fermée ou est verrouillée.

Selon un mode de réalisation, la mise en œuvre de l'étape de mesure dure moins de trois secondes et de préférence moins de une seconde.

Selon un mode de réalisation, la mémoire comporte pour chaque capteur capacitif interdigité, une courbe représentant des valeurs de capacitance moyennes en fonction du temps, et un écart déterminé, et dans lequel le procédé comporte en outre les étapes suivantes mises en œuvre, pour chaque capteur capacitif interdigité, après l'étape de détermination d'une valeur de capacitance maximum et d'une valeur de capacitance minimum:
- sélection d'un nombre déterminé de dernières valeurs de capacitance moyennes de ladite courbe, ledit nombre déterminé étant compris entre 5 et 20, et est de préférence égal à 10,
- calcul de la différence entre la valeur de capacitance minimum et les valeurs sélectionnées,
- calculde la différence entre la valeur de capacitance maximum et les valeurs sélectionnées,
- si au moins une desdites différences est supérieure audit écart, le procédé retourne à l'étape de mesure,
- si lesdites différences sont inférieures audit écart, le procédé se poursuit par l'étape de calcul d'une valeur de capacitance moyenne.

Selon un mode de réalisation, lorsque lesdites différences sont inférieures audit écart, le procédé comporte une étape d'enregistrement de la valeur de capacitance moyenne dans ladite courbe.

Selon un mode de réalisation, la courbe comprend une valeur de capacitance mesurée après fabrication du siège et avant montage dans le véhicule, une valeur de capacitance mesurée après montage du siège dans le véhicule automobile et une valeur de capacitance mesurée avant premier usage.

La présente invention concerne également un système de détermination de l'état d'occupation d'un siège d'un véhicule automobile, ledit système comportant :
- un siège de véhicule automobile comprenant :
- une assise ayant une face de réception destinée à accueillir une personne, la face de réception étant partagée en une zone avant et une zone arrière, la zone avant et la zone arrière étant situées de part et d'autre d'un plan central transverse de l'assise,
- un dossier ayant une face de réception destinée à accueillir le dos d'une personne, le dossier étant articulé à l'assise, la zone arrière de la face de réception de l'assise étant adjacente au dossier,
- uniquement trois capteurs capacitifs interdigités portés par la face de réception du dossier, et uniquement trois capteurs capacitifs interdigités portés par la face de réception de l'assise, un premier capteur capacitif interdigité étant situé sur une zone supérieure et latérale de ladite face de réception du dossier, le deuxième capteur capacitif interdigité étant situé sur une zone inférieure ou une zone centrale de ladite face de réception du dossier, le troisième capteur capacitif interdigité étant situé sur une zone latérale de ladite face de réception du dossier, le troisième capteur capacitif interdigité étant situé à une position inférieure par rapport au deuxième capteur capacitif, le deuxième capteur capacitif interdigité étant décalé latéralement vers le centre par rapport au premier et au troisième capteurs capacitifs interdigités, le quatrième capteur capacitif interdigité étant situé sur une partie latérale de la zone arrière de la face de réception de l'assise, le cinquième capteur capacitif interdigité étant situé sur une zone arrière ou centrale de la face de réception de l'assise, le sixième capteur capacitif interdigité étant situé sur une partie latérale de la zone avant de la face de réception de l'assise, le cinquième capteur capacitif interdigité étant décalé latéralement vers le centre par rapport au quatrième et au sixième capteur capacitifs interdigités, le cinquième capteur capacitif interdigité est situé longitudinalement entre le quatrième et le sixième capteurs capacitifs interdigités,
- un contrôleur propre à mettre en œuvre le procédé de détermination de l'état d'occupation d'un siège conforme aux caractéristiques mentionnées ci-dessus. Selon un mode de réalisation, le deuxième capteur capacitif interdigité est positionné latéralement au centre de la face de réception du siège, et dans lequel le cinquième capteur capacitif interdigité est positionné latéralement au centre de la face de réception.

### Brève description des figures

[Fig. 1] est une vue schématique d'un premier exemple d'un système de détermination selon la présente invention ;
[Fig. 2] est une vue schématique représentant un exemple de bloc-diagramme du contrôleur du système de détermination illustré sur la figure 1 ;
[Fig. 3] est un diagramme représentant la variation d'une valeur de capacitance moyenne d'un capteur capacitif interdigité du système de détermination illustré sur la figure 1, en fonction du temps ;
[Fig. 4] est une vue schématique d'un deuxième exemple d'un système de détermination selon la présente invention ;
[Fig. 5] est un organigramme des étapes du procédé de détermination selon la présente invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description détaillée de l'invention

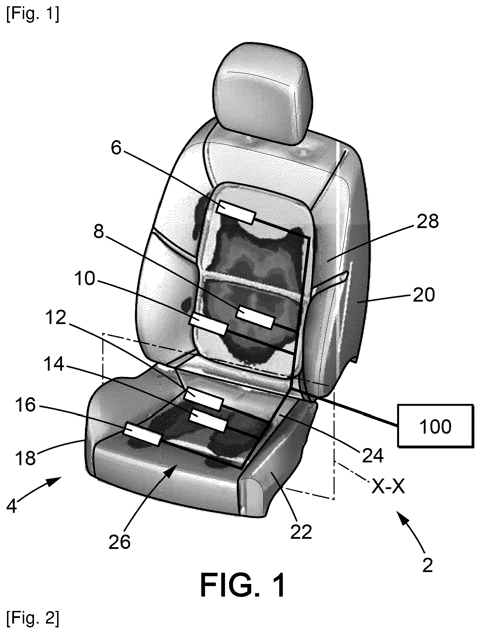

En référence à la figure 1, le système de détermination 2 selon la présente divulgation comporte un siège 4 de véhicule automobile, six capteurs capacitifs interdigités 6, 8, 10, 12, 14, 16 portés par le siège, et un contrôleur 100 connecté électriquement aux capteurs capacitifs interdigités.

Le siège 4 comporte une assise 18 et un dossier 20 articulé à l'assise.

En particulier, l'assise 18 comprend une face de réception 22 destinée à accueillir une personne ou un objet. Pour les besoins de cette description, on dit que la face de réception de l'assise est partagée par un plan central transverse X-X en une zone adjacente au dossier, dite « zone arrière » 24, et en une zone située du côté opposé au dossier, dite « zone avant » 26.

Le dossier 20 comprend également une face de réception 28 propre à accueillir le dos d'une personne humaine ou une face d'un objet. Dans la présente divulgation, la face de réception 28 du dossier porte trois capteurs capacitifs interdigités du système de détermination. La figure 1 montre un exemple avantageux de positionnement des capteurs capacitifs interdigités. Ce positionnement a été choisi en tenant compte des zones d'appui d'une personne humaine assise sur le siège.

Un premier capteur capacitif interdigité 6 est disposé sur une zone supérieure et latérale de la face de réception du dossier. Ainsi, le premier capteur capacitif interdigité 6 est situé à un emplacement de la face de réception du dossier qui correspond à une zone d'appui d'une omoplate de la personne assise sur le siège et adossée au dossier.

Un deuxième capteur capacitif interdigité 8 est situé sur une zone inférieure et latéralement centré de la face de réception du dossier. Le deuxième capteur capacitif interdigité 8 est situé à un emplacement de la face de réception du dossier qui correspond à une zone d'appui des vertèbres lombaires de cette personne. En variante, le deuxième capteur capacitif interdigité 8 est situé sur une zone centrée latéralement et longitudinalement de la face de réception du dossier.

Un troisième capteur capacitif interdigité 10 est situé sur une zone inférieure et latérale de la face de réception du dossier. Le troisième capteur capacitif interdigité 10 est situé à un emplacement de la face de réception du dossier qui correspond à une zone d'appui des moyens fessiers de cette personne.

Le deuxième capteur capacitif interdigité 8 est situé verticalement entre le premier et le troisième capteurs capacitifs interdigités. Le deuxième capteur capacitif interdigité est toujours situé en dessous du premier capteur interdigité 6.

La face de réception 22 de l'assise porte également trois capteurs capacitifs interdigités du système de détermination.

Un quatrième capteur capacitif interdigité 12 est situé sur une partie latérale de la zone arrière 24 de la face de réception de l'assise. Le quatrième capteur capacitif interdigité 12 est situé à un emplacement de la face de réception de l'assise qui correspond à une zone d'appui d'une fesse de la personne assise sur le siège et adossée au dossier.

Un cinquième capteur capacitif interdigité 14 est situé sur une partie latéralement centrée de la zone arrière 24 de la face de réception de l'assise. En variante, le cinquième capteur capacitif interdigité est situé sur une zone longitudinalement centrale de la face de réception de l'assise.

Un sixième capteur capacitif interdigité 16 est situé sur une partie latérale de la zone avant 26 de la face de réception de l'assise. Le sixième capteur capacitif interdigité 16 est située à un emplacement de la face de réception de l'assise qui correspond à une zone d'appui d'un ischio-jambier de cette personne. Le cinquième capteur capacitif interdigité 14 est situé verticalement entre le quatrième 12 et le sixième 16 capteurs capacitifs interdigités.

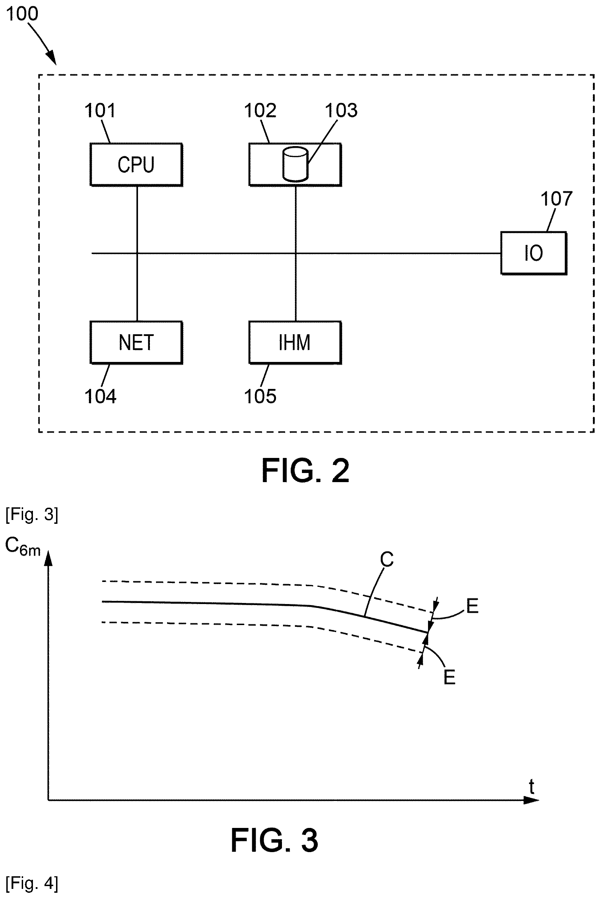

En référence à la figure 2, le contrôleur 100 du système de détermination comporte un bus de communication connecté, par exemple, à une unité centrale de traitement 101, tel qu'un processeur ou un microprocesseur, et notée CPU. Le contrôleur 100 comporte aussi une mémoire 102 à accès aléatoire, notée RAM et/ou une mémoire morte, notée ROM pour mémoriser notamment une base de données 103 et un code exécutable permettant de mettre en œuvre le procédé de détermination au moyen du siège et des capteurs capacitifs interdigités précédemment décrits.

Le contrôleur 100 peut être un appareil programmable qui utilise un logiciel, un circuit intégré spécifique (ASIC) ou une partie de l'unité de commande d'un moteur (ECU). Le contrôleur peut éventuellement comprendre :
- une interface réseau 104 qui est normalement connectée à un réseau de communication sur lequel des données numériques à traiter sont transmises ou reçues.
- une interface utilisateur 105 pour recevoir des entrées d'un utilisateur ou pour afficher des informations à un utilisateur,
- un module d'entrée-sortie 107, noté IO, pour la réception, l'envoi de données depuis ou vers des périphériques externes tels que disque dur, support de stockage amovible ou autres.

La base de données 103 comporte pour chaque capteur capacitif interdigité :
- une valeur de capacitance de référence,
- une courbe C représentant les valeurs de capacitance moyennes en fonction du temps, et un écart déterminé E,
- au moins une valeur seuil,
- une première plage P1 de variation de valeurs de capacitance représentative d'un état occupé du siège par une personne,
- au moins deux sous-domaines D11, D12, D13 de variation de capacitance définis pour chaque capteur capacitif interdigité, chaque sous domaines de variation de capacitance étant représentatif d'un type morphologique d'une personne, les sous-domaines D11, D12, D13 appartenant à la première plage de variation P1,
- une deuxième plage P2 de variation de valeurs de capacitance représentative d'un état occupé par un enfant un chien ou une chose, et
- au moins deux sous- domaines D21, D22 de variation de capacitance définis pour chaque capteur capacitif interdigité, chaque sous domaines de variation de capacitance étant représentatif d'un type morphologique d'une personne, les sous-domaines D21, D22 appartenant à la deuxième plage P2.

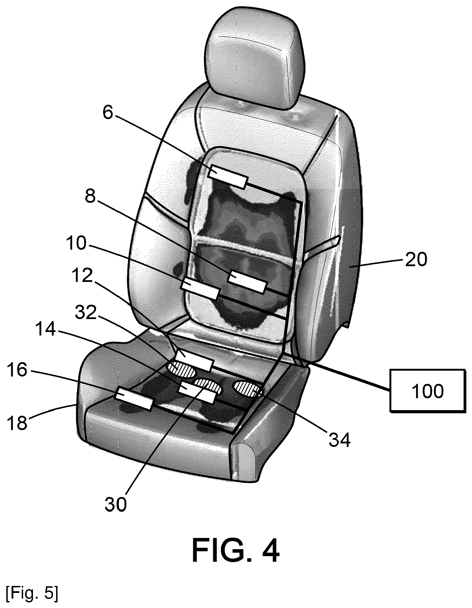

Le tableau ci-dessous comprend des exemples de valeur seuil, de première plage de variation P1 et de deuxième plage de variation P2 pour les six capteurs du système de détermination représenté sur les figures 1 et 4.

| Référence Capteur | Capacitance moyenne | Valeur seuil | Deuxième | | Première | |
|---|---|---|---|---|---|---|
| | | | plage P2 | | plage P1 | |
| 6 | 11 618 | 3 | 3 | 13 | 15 | 130 |
| 8 | 11 301 | 3 | 3 | 25 | 30 | 150 |
| 10 | 11 540 | 3 | 3 | 15 | 20 | 140 |
| 12 | 11 537 | 3 | 3 | 25 | 30 | 150 |
| 14 | 11 120 | 3 | 3 | 7,5 | 10 | 120 |
| 16 | 11 505 | 3 | 3 | 25 | 15 | 130 |

Les valeurs dans ce tableau sont données en **10⁻³** picoFarad.

Le tableau ci-dessous comprend des exemples de trois sous-domaines D11, D12, D13 de la première plage de variation P1 et de deux sous-domaines D21, D22 de la deuxième plage de variation P2 pour les six capteurs du système de détermination représenté sur les figures 1 et 4.

| Référence Capteur | D21 | D22 | D11 | D12 | D13 |
|---|---|---|---|---|---|
| 6 | 5-10 | 10-13 | 15- 20 | 25-60 | 60-90 |
| 8 | 5-10 | 10-13 | 30-40 | 45-90 | 15-90 |
| 10 | 5-10 | 10-13 | 15-20 | 40-80 | 15-90 |
| 12 | 5-10 | 10-13 | 15-20 | 40-60 | 15-90 |
| 14 | 5-10 | 10-13 | 10-20 | 25-35 | 40-90 |
| 16 | 5-10 | 10-13 | 15-30 | 30-50 | 50-90 |

Les valeurs dans ce tableau sont données en **10⁻³** pico Farad.

La figure 3 illustre un exemple d'une courbe C représentant les valeurs de capacitance moyennes en fonction du temps du capteur de capacité interdigité 6. Cette courbe est différente pour chaque capteur de capacité interdigité. L'écart E représente une variation de mesure de capacitance qui peut être due à des variations de température ou d'humidité. Le diagramme de la figure 3 illustre par une première courbe en pointillés un écart positif (de +E) par rapport à la courbe C, et par une deuxième courbe en pointillés un écart négatif (de - E) par rapport à la courbe C. Dans le mode de réalisation illustré sur la figure 1, le système de détermination 2 comprend un siège 4, un contrôleur 100 et uniquement six capteur capacitifs interdigités. Selon un deuxième mode de réalisation illustré sur la figure 4, un système de détermination 3 comprend en plus des six capteurs capacitifs interdigités, trois électrodes résistives 30, 32, 34 portés par la face de réception 22 de l'assise et connectées au contrôleur 100. Les électrodes résistives sont configurées pour déterminer une pression de contact du corps de l'utilisateur. Une électrode résistive 30 peut par exemple être située au centre de la zone arrière de la face de réception de l'assise. Deux électrodes résistives 32, 34 peuvent par exemple être situées de part et d'autre d'un plan central longitudinal de l'assise. Dans ce mode de réalisation, les électrodes résistives sont positionnées à une distance des capteurs capacitifs interdigités comprise entre 10 millimètres et 50 millimètres, et de préférence de l'ordre de 20 millimètres.

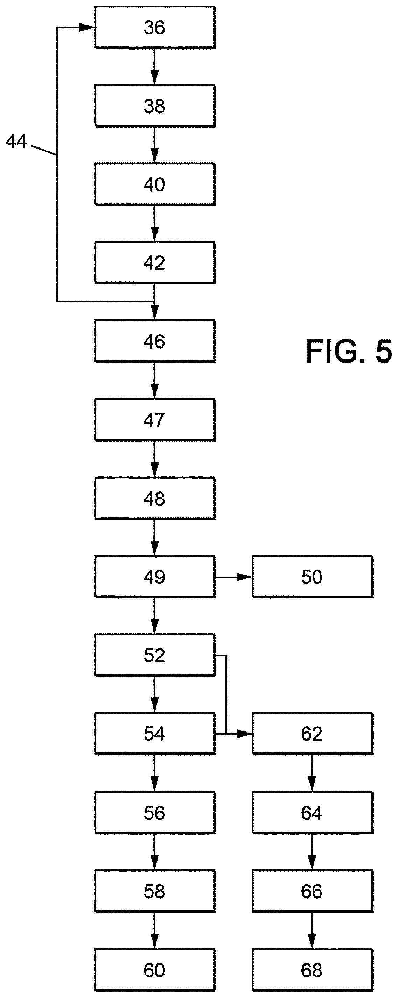

En référence à la figure 5, le procédé de détermination selon la présente invention va à présent être décrit. Ce procédé peut être mis en œuvre par le système de détermination 2 illustré sur la figure 1 ou par le système de détermination 3 illustré sur la figure 4.

Le procédé débute par une étape 36 de mesure d'au moins trois valeurs de capacitance par le premier capteur de capacitance interdigité 6. L'étape de mesure dure moins de trois secondes et de préférence moins d'une seconde. L'étape de mesure est par exemple, mise en œuvre à chaque fois qu'une portière du véhicule automobile est ouverte ou est déverrouillée.

En variante, l'étape de mesure est mise en œuvre à chaque fois qu'une portière du véhicule automobile est fermée ou est verrouillée.

L'étape de mesure 36 est également mise en œuvre pour le deuxième capteur 8 capacitif interdigité, le troisième capteur 10 capacitif interdigité, le quatrième 12 capteur capacitif interdigité, le cinquième capteur 14 capacitif interdigité et le sixième capteur 16 capacitif interdigité.

Puis, le procédé comporte une étape 38 de détermination d'une valeur de capacitance minimum et d'une valeur de capacitance maximum parmi les valeurs de capacitance mesurées par le premier capteur de capacitance interdigité 6. L'étape de détermination 38 est également mise en œuvre pour le deuxième capteur 8 capacitif interdigité, le troisième capteur 10 capacitif interdigité, le quatrième capteur 12 capacitif interdigité, le cinquième capteur 14 capacitif interdigité et le sixième capteur 16 capacitif interdigité.

Le procédé comporte une étape 40 de sélection d'un nombre déterminé des dernières valeurs de capacitance moyennes de la courbe C définie pour le premier capteur 6 de capacitance interdigité. Ce nombre déterminé est compris entre 5 et 20. De préférence, ce nombre déterminé est égal à 10.

Le procédé comporte en outre une étape 42 de calcul de la différence entre la valeur de capacitance minimum générée par le premier capteur de capacitance interdigité 6 et les valeurs sélectionnées au cours de l'étape 40. Puis, les différences entre la valeur de capacitance maximum générée par le premier capteur 6 de capacitance interdigité et les valeurs sélectionnées sont calculées.

Si au moins une desdites différences est supérieure à l'écart E mémorisé pour le premier capteur 6 capacitif interdigité, le procédé de détermination retourne à l'étape de mesure au cours d'une étape 44.

Si les différences sont inférieures à l'écart E, le procédé se poursuit par une étape 46 de calcul d'une valeur de capacitance moyenne à partir de la valeur de capacitance maximum et de la valeur de capacitance minimum déterminées au cours de l'étape 38.

En variante, la valeur moyenne est calculée directement à partir de l'ensemble des valeurs de capacitance mesurées.

Parallèlement, si les différences sont inférieures à l'écart E, la valeur de capacitance moyenne est enregistrée dans la courbe C au cours d'une étape 47.

Les étapes 40, 42, 44 et 46 sont également mises en œuvre pour le deuxième capteur 8 capacitif interdigité, le troisième capteur 10 capacitif interdigité, le quatrième capteur 12 capacitif interdigité, le cinquième capteur 14 capacitif interdigité et le sixième capteur 16 capacitif interdigité.

Le procédé comporte en outre une étape 48 de calcul de la différence entre la valeur de capacitance moyenne et la valeur de la capacitance de référence.

Puis, au cours d'une étape 49, la différence calculée au cours de l'étape 48 est comparée à la valeur seuil Vₛ₆ enregistrée dans la base de données 103 et associée au premier capteur 6 de capacitance interdigité.

Les étapes de calcul de la différence 48 et de comparaison 49 sont mises en œuvre avec 1) la valeur de capacitance moyenne du deuxième capteur 8 capacitif interdigité et la valeur seuil Vₛ₈ associée au deuxième capteur de capacitance interdigité, 2) la valeur de capacitance moyenne du troisième capteur 10 capacitif interdigité et la valeur seuil Vₛ₁₀ associée au troisième capteur de capacitance interdigité, 3) la valeur de capacitance moyenne du quatrième capteur 12 capacitif interdigité et la valeur seuil Vₛ₁₂ associée au quatrième capteur capacitif interdigité, 4) la valeur de capacitance moyenne du cinquième capteur capacitif 14 interdigité et la valeur de capacitance seuil Vₛ₁₄ associée au cinquième capteur capacitif interdigité, 5) la valeur de capacitance moyenne du sixième capteur 16 capacitif interdigité et la valeur de capacitance seuil Vₛ₁₆ associée au sixième capteur capacitif interdigité.

Si l'ensemble des différences calculées est inférieur aux valeurs seuil, le procédé comporte une étape 50 de détermination du fait que le siège 4 n'est pas occupé c'est-à-dire qu'il est vide. Le contrôle transmet alors un signal représentatif du fait que le siège est vide. Ce signal peut par exemple être affiché sur un dispositif d'affichage du tableau de bord ou être transmis à un système de sécurité du véhicule.

Si l'ensemble des valeurs de capacitance moyenne est supérieur aux valeurs seuil, le procédé comporte une étape 52 de détermination du fait que le siège 4 est occupé par un objet, un animal ou une personne.

Lorsque le procédé a déterminé que le siège est occupé, le procédé comporte en outre une nouvelle étape 54 de comparaison de la différence calculée au cours de l'étape 48 avec la première plage P1 de variation de capacitance définie pour le premier capteur de capacitance 6.

L'étape 54 est mise en œuvre avec les différences calculées pour le deuxième capteur 8 capacitif interdigité, le troisième capteur 10 capacitif interdigité, le quatrième capteur 12 capacitif interdigité, le cinquième capteur 14 capacitif interdigité et le sixième capteur 16 capacitif interdigité, avec à chaque fois les premières plages de variation P1 définies pour ces capteurs.

Lorsque les différences calculées pour chaque capteur capacitif interdigité sont comprises dans les premières plages P1 de variation de capacitance définies pour chacun de ces capteurs, le procédé détermine un état occupé du siège par une personne humaine, au cours d'une étape 56.

Le procédé se poursuit par une étape 58 de comparaison des différences calculées au cours de l'étape 48 aux trois sous-domaines de valeurs de capacitance D11, D12, D13 définies pour chaque capteur.

Le procédé comporte une étape 60 de détermination d'un type morphologique de la personne assise sur le siège en fonction du résultat des comparaison (étape 58). Les types morphologiques définissent une plage de poids et une plage de taille d'un individu. Par exemple, la population totale européenne constitue le domaine de l'ensemble des types morphologiques.

A l'intérieur de ce domaine, des sous-domaines sont définis par classification de la population totale, en particulier suivant des percentiles de la taille et du poids du domaine. Un exemple du sous-domaine D11 comprend une partie des types morphologiques de la population, respectant la condition suivante, la taille est inférieure ou égale au 5éme percentile de la taille de la population européenne et ou le poids est inférieur ou égal au 5éme percentile du poids de la population européenne. Un exemple du sous-domaine D12 comprend une partie des types morphologiques de la population européenne, respectant la condition suivante, la taille est inférieure ou égale au 50éme percentile de la taille de la population et ou le poids est inférieur ou égal au 50éme percentile du poids de la population. Un exemple du sous-domaine D13 comprend une partie des types morphologiques de la population européenne, respectant la condition suivante, la taille est supérieure ou égale au 95éme percentile de la taille de la population et ou le poids est supérieur ou égal au 95éme percentile du poids de la population.

La population asiatique peut constituer, un autre exemple de domaine de l'ensemble des types morphologiques. La population américaine peut constituer, un autre exemple de domaine de l'ensemble des types morphologiques. Chaque domaine de l'ensemble de ces types morphologiques comprend des sous -domaines. Ces exemples précédents sont indépendants les uns des autres, d'autres exemples pourraient être donnés.

Au cours de l'étape 62, la différence calculée au cours de l'étape 48 est comparée avec la deuxième plage P2 de variation de capacitance définie pour le premier capteur de capacitance 6.

L'étape 62 est mise en œuvre avec les différences calculées pour le deuxième capteur 8 capacitif interdigité, le troisième capteur 10 capacitif interdigité, le quatrième capteur 12 capacitif interdigité, le cinquième capteur 14 capacitif interdigité et le sixième capteur 16 capacitif interdigité, avec à chaque fois les deuxièmes plages de variation P2 définies pour ces capteurs.

L'étape 62 peut être mise en œuvre directement après l'étape 52 ou après l'étape 54 lorsque au moins une des différences calculées au cours de l'étape 48 n'est pas comprise dans les premières plages P1.

Lorsque les différences calculées pour chaque capteur capacitif interdigité sont comprises dans les deuxièmes plages P2 de variation de capacitance définies pour chacun de ces capteurs, le procédé détermine un état occupé du siège par une chose, un animal ou un enfant, au cours d'une étape 64.

Le procédé se poursuit par une étape 66 de comparaison des différences calculées au cours de l'étape 48 aux trois sous-domaines de valeurs de capacitance D11, D12, D13 définis pour chaque capteur.

Le procédé comporte une étape 68 de détermination d'une plage de valeurs d'âge d'enfant assis sur le siège en fonction du résultat de la comparaison (étape 66). Les plages d'âges sont par exemple de 0 à 1 an et de 1 an à 6 ans.

## Revendications

1. Procédé de détermination de l'état d'occupation d'un siège (4) d'un véhicule automobile, le procédé étant mis en œuvre par un système de détermination (2) comprenant un siège (4), au moins six capteurs capacitifs interdigités (6, 8, 10,12,14,16) portés par le siège, et un contrôleur (100) connecté aux capteurs capacitifs interdigités, ledit contrôleur comprenant une mémoire (102) comportant une base de données (103), ladite base de données comportant au moins une valeur de capacitance de référence et une valeur seuil pour chaque capteur capacitif interdigité, le procédé comportant une étape mesure (36) d'au moins trois valeurs de capacitance pour chaque capteur capacitif interdigité (6, 8, 10, 12,14,16), les étapes suivantes étant mises en œuvre par le contrôleur pour les valeurs de capacitance mesurées par chaque capteur capacitif interdigité :
- calcul (46) d'une valeur de capacitance moyenne à partir d'au moins deux valeurs de capacitance mesurées,
- calcul (48) de la différence entre la valeur de capacitance moyenne et la valeur de capacitance de référence,
- comparaison (49) de la différence calculée à la valeur seuil,
- détermination (50, 52, 56) de l'état d'occupation du siège en fonction du résultat de ladite comparaison.

2. Procédé de détermination selon la revendication 1, qui comporte en outre une étape de détermination (38) d'une valeur de capacitance minimum et d'une valeur de capacitance maximum parmi les valeurs de capacitance mesurées, et dans lequel l'étape de calcul de la valeur de capacitance moyenne est une étape de calcul (46) d'une valeur de capacitance moyenne à partir de la valeur de capacitance minimum et de la valeur de capacitance maximum.

3. Procédé de détermination selon l'une quelconques des revendications 1 et 2, dans lequel la base de données (103) comporte en outre des premières plages de variation de capacitance (P1) définies pour les capteurs capacitifs interdigités, chaque première plage de variation (P1) étant définie pour un capteur capacitif interdigité, les premières plages de variation étant représentatives d'un état occupé par une personne humaine,
et dans lequel le procédé comporte en outre pour chaque capteur capacitif interdigité,
une étape de comparaison (54) de la différence calculée à la première plage de variation (P1), l'état d'occupation déterminé (56) étant un état occupé par une personne humaine, lorsque les différences calculées pour chaque capteur capacitif interdigité sont comprises dans les premières plages de variation (P1).

4. Procédé de détermination selon la revendication 3, dans lequel la base de données (103) comporte en outre au moins deux sous domaines de variation de capacitance (D11, D12) définis pour chaque capteur capacitif interdigité, chaque sous domaines de variation de capacitance étant représentatif d'un type morphologique d'une personne, et dans lequel le procédé comporte les étapes suivantes :
- comparaison (58) des différences calculées aux au moins deux sous domaines de variation de capacitance (D11, D12) ; et
- détermination (60) d'un type morphologique de la personne assise sur le siège en fonction du résultat de ladite comparaison.

5. Procédé de détermination selon l'une des revendications 1 et 2, dans lequel la base de données comporte en outre des deuxièmes plages de variation de capacitance (P2) définies pour les capteurs capacitifs interdigités, chaque deuxième plage de variation (P2) étant définie pour un capteur de capacitance, les deuxièmes plages de variation (P2) étant représentatives d'un état occupé par une chose, un animal ou un enfant,
et dans lequel le procédé comporte en outre pour chaque capteur capacitif interdigité, une étape de comparaison (62) de la différence calculée à la deuxième plage de variation (P2), l'état d'occupation déterminé (64) étant un état occupé par une chose, un animal ou un enfant, lorsque les valeurs de capacitance moyennes calculées pour chaque capteur capacitif interdigité sont comprises dans les deuxièmes plages de variation de capacitance.

6. Procédé de détermination selon la revendication 5, dans lequel la base de données comporte en outre au moins deux sous- domaines de variation de capacitance (D21, D22) définis pour les capteurs capacitifs interdigités et respectivement, chaque sous-domaine de variation de capacitance (D21, D22) étant représentatif d'une plage de valeurs d'âge d'enfant, et dans lequel le procédé comporte en outre les étapes suivantes :
- comparaison (66) des différences calculées aux au moins deux sous domaines de variation de capacitance, et
- détermination (68) d'une plage de valeurs d'âge d'enfant en fonction du résultat de la comparaison.

7. Procédé de détermination selon l'une quelconque des revendications 1 à 6, dans lequel l'étape de mesure (36) est mise en œuvre à chaque fois qu'une portière du véhicule automobile est ouverte ou est déverrouillée.

8. Procédé de détermination selon l'une quelconque des revendications 1 à 6, dans lequel l'étape de mesure (36) est mise en œuvre à chaque fois qu'une portière du véhicule automobile est fermée ou est verrouillée.

9. Procédé de détermination selon l'une quelconque des revendications 1 à 8, dans lequel la mise en œuvre de l'étape de mesure (36) dure moins de trois secondes et de préférence moins de une seconde.

10. Procédé de détermination selon l'une quelconque des revendications 1 à 9, dans lequel la mémoire comporte pour chaque capteur capacitif interdigité, une courbe (C) représentant des valeurs de capacitance moyennes en fonction du temps, et un écart déterminé (E), et dans lequel le procédé comporte en outre les étapes suivantes mises en œuvre, pour chaque capteur capacitif interdigité, après l'étape de détermination (38) d'une valeur de capacitance maximum et d'une valeur de capacitance minimum:
- sélection (40) d'un nombre déterminé de dernières valeurs de capacitance moyennes de ladite courbe, ledit nombre déterminé étant compris entre 5 et 20, et est de préférence égal à 10,
- calcul (42) de la différence entre la valeur de capacitance minimum et les valeurs sélectionnées,
- calcul (42) de la différence entre la valeur de capacitance maximum et les valeurs sélectionnées,
- si au moins une desdites différences est supérieure audit écart (E), le procédé retourne à l'étape de mesure (36),
- si lesdites différences sont inférieures audit écart (E), le procédé se poursuit par l'étape de calcul (46) d'une valeur de capacitance moyenne .

11. Procédé de détermination selon la revendication 10, dans lequel si lesdites différences sont inférieures audit écart (E), le procédé comporte une étape d'enregistrement (47) de la valeur de capacitance moyenne dans ladite courbe (C).

12. Procédé de détermination selon l'une quelconque des revendications 10 et 11, dans lequel la courbe comprend une valeur de capacitance mesurée après fabrication du siège et avant montage dans le véhicule, une valeur de capacitance mesurée après montage du siège dans le véhicule automobile et une valeur de capacitance mesurée avant premier usage.

13. Système de détermination (2) de l'état d'occupation d'un siège (4) d'un véhicule automobile, ledit système comportant :
- un siège (4) de véhicule automobile comprenant :
- une assise (18) ayant une face de réception (22) destinée à accueillir une personne, la face de réception (22) étant partagée en une zone avant (26) et une zone arrière (24), la zone avant et la zone arrière étant situées de part et d'autre d'un plan central transverse (X-X) de l'assise,
- un dossier (20) ayant une face de réception (28) destinée à accueillir le dos d'une personne, le dossier (20) étant articulé à l'assise (18) , la zone arrière (24) de la face de réception de l'assise étant adjacente au dossier (20),
- uniquement trois capteurs capacitifs interdigités (6, 8,10) portés par la face de réception (28) du dossier, et uniquement trois capteurs capacitifs interdigités (12,14,16) portés par la face de réception (22) de l'assise,
un premier capteur capacitif interdigité (6) étant situé sur une zone supérieure et latérale de ladite face de réception (28) du dossier,
le deuxième capteur capacitif interdigité (8) étant situé sur une zone inférieure ou une zone centrale de ladite face de réception du dossier,
le troisième capteur capacitif interdigité (10) étant situé sur une zone latérale de ladite face de réception du dossier,
le troisième capteur capacitif interdigité (10) étant situé à une position inférieure par rapport au deuxième capteur capacitif, le deuxième capteur capacitif interdigité (8) étant décalé latéralement vers le centre par rapport au premier et au troisième capteurs capacitifs interdigités,
le quatrième (12) capteur capacitif interdigité étant situé sur une partie latérale de la zone arrière (24) de la face de réception de l'assise, le cinquième capteur capacitif interdigité (14) étant situé sur une zone arrière ou centrale de la face de réception de l'assise, le sixième capteur capacitif interdigité (16) étant situé sur une partie latérale de la zone avant de la face de réception de l'assise, le cinquième capteur capacitif interdigité (14) étant décalé latéralement vers le centre par rapport au quatrième et au sixième capteur capacitifs interdigités, le cinquième capteur capacitif interdigité (14) est situé longitudinalement entre le quatrième (12) et le sixième (16) capteurs capacitifs interdigités,
- un contrôleur (100) propre à mettre en œuvre le procédé de détermination de l'état d'occupation d'un siège conforme à l'une quelconque des revendications 1 à 12.

14. Système de détermination (2) selon la revendication 13, dans lequel le deuxième capteur capacitif interdigité (8) est positionné latéralement au centre de la face de réception du siège, et dans lequel le cinquième capteur capacitif interdigité (14) est positionné latéralement au centre de la face de réception.

## Patentansprüche

1. Verfahren zum Bestimmen des Belegungsstatus eines Sitzes (4) in einem Kraftfahrzeug, wobei das Verfahren von einem Bestimmungssystem (2) durchgeführt wird, das einen Sitz (4), mindestens sechs interdigitale kapazitive Sensoren (6, 8, 10, 12, 14, 16), die von dem Sitz getragen werden, und eine Steuerung (100) einschließt, die mit den interdigitalen kapazitiven Sensoren verbunden ist, wobei die Steuerung einen Speicher (102) einschließt, der eine Datenbank (103) umfasst, wobei die Datenbank mindestens einen Referenzkapazitätswert und einen Schwellenwert für jeden interdigitalen kapazitiven Sensor umfasst, wobei das Verfahren einen Schritt des Messens (36) von mindestens drei Kapazitätswerten für jeden interdigitalen kapazitiven Sensor (6, 8, 10, 12, 14, 16) umfasst, wobei die folgenden Schritte von der Steuerung für die von jedem interdigitalen kapazitiven Sensor gemessenen Kapazitätswerte durchgeführt werden:
- Berechnen (46) eines mittleren Kapazitätswerts aus mindestens zwei gemessenen Kapazitätswerten,
- Berechnen (48) der Differenz zwischen dem durchschnittlichen Kapazitätswert und dem Referenzkapazitätswert,
- Vergleichen (49) der berechneten Differenz mit dem Schwellenwert,
- Bestimmen (50, 52, 56) des Belegungsstatus des Sitzes auf der Grundlage des Ergebnisses des Vergleichs.

2. Bestimmungsverfahren nach Anspruch 1, das ferner einen Schritt des Bestimmens (38) eines minimalen Kapazitätswerts und eines maximalen Kapazitätswerts aus den gemessenen Kapazitätswerten umfasst, und wobei der Schritt des Berechnens des durchschnittlichen Kapazitätswerts ein Schritt des Berechnens (46) eines durchschnittlichen Kapazitätswerts aus dem minimalen Kapazitätswert und dem maximalen Kapazitätswert ist.

3. Bestimmungsverfahren nach einem der Ansprüche 1 und 2, wobei die Datenbank (103) ferner erste Kapazitätsvariationsbereiche (P1) umfasst, die für die interdigitalen kapazitiven Sensoren definiert sind, wobei jeder erste Variationsbereich (P1) für einen interdigitalen kapazitiven Sensor definiert ist, wobei die ersten Variationsbereiche repräsentativ für einen Status Belegt durch eine menschliche Person sind,
und wobei das Verfahren für jeden interdigitalen kapazitiven Sensor ferner umfasst:
ein Schritt des Vergleichens (54) der berechneten Differenz mit dem ersten Variationsbereich (P1), wobei der bestimmte Belegungsstatus (56) ein Statuts Belegt durch eine menschliche Person ist, wenn die für jeden interdigitalen kapazitiven Sensor berechneten Differenzen innerhalb der ersten Variationsbereiche (P1) liegen.

4. Bestimmungsverfahren nach Anspruch 3, wobei die Datenbank (103) ferner mindestens zwei Kapazitätsvariationsteilbereiche (D11, D12) umfasst, die für jeden interdigitalen kapazitiven Sensor definiert sind, wobei jeder Kapazitätsvariationsteilbereich repräsentativ für einen morphologischen Typ einer Person ist, und wobei das Verfahren die folgenden Schritte umfasst:
- Vergleichen (58) der berechneten Differenzen mit den mindestens zwei Kapazitätsänderungsteilbereichen (D11, D12); und
- Bestimmen (60) eines morphologischen Typs der auf dem Sitz sitzenden Person auf der Grundlage des Ergebnisses des Vergleichs.

5. Bestimmungsverfahren nach einem der Ansprüche 1 und 2, wobei die Datenbank ferner zweite Kapazitätsvariationsbereiche (P2) umfasst, die für die interdigitalen kapazitiven Sensoren definiert sind, wobei jeder zweite Variationsbereich (P2) für einen Kapazitätssensor definiert ist, wobei die zweiten Variationsbereiche (P2) repräsentativ für einen Status Belegt durch einen Gegenstand, ein Tier oder ein Kind eingenommen sind,
und wobei das Verfahren ferner für jeden interdigitalen kapazitiven Sensor einen Schritt des Vergleichens (62) der berechneten Differenz mit dem zweiten Variationsbereich (P2) umfasst, wobei der bestimmte Belegungsstatus (64) ein Status Belegt durch einen Gegenstand, ein Tier oder ein Kind ist, wenn die für jeden interdigitalen kapazitiven Sensor berechneten durchschnittlichen Kapazitätswerte innerhalb der zweiten Kapazitätsvariationsbereiche liegen.

6. Bestimmungsverfahren nach Anspruch 5, wobei die Datenbank ferner mindestens zwei Kapazitätsvariationsteilbereiche (D21, D22) umfasst, die für die interdigitalen kapazitiven Sensoren definiert sind und wobei jede Kapazitätsvariationsteilbereiche (D21, D22) jeweils repräsentativ für einen Bereich von Kindesalterwerten ist, und wobei das Verfahren ferner die folgenden Schritte umfasst:
- Vergleichen (66) der berechneten Differenzen mit den mindestens zwei Kapazitätsänderungsteilbereichen, und
- Bestimmen (68) eines Bereichs von Kindesalterwerten auf der Grundlage des Ergebnisses des Vergleichs.

7. Bestimmungsverfahren nach einem der Ansprüche 1 bis 6, wobei der Schritt des Messens (36) jedes Mal durchgeführt wird, wenn eine Kraftfahrzeugtür geöffnet oder entriegelt wird.

8. Bestimmungsverfahren nach einem der Ansprüche 1 bis 6, wobei der Schritt des Messens (36) jedes Mal durchgeführt wird, wenn eine Kraftfahrzeugtür geschlossen oder verriegelt wird.

9. Bestimmungsverfahren nach einem der Ansprüche 1 bis 8, wobei der Schritt des Messens (36) weniger als drei Sekunden und vorzugsweise weniger als eine Sekunde dauert.

10. Bestimmungsverfahren nach einem der Ansprüche 1 bis 9, wobei der Speicher für jeden interdigitalen kapazitiven Sensor eine Kurve (C), die durchschnittliche Kapazitätswerte als Funktion der Zeit darstellt, und eine bestimmte Abweichung (E) umfasst, und wobei das Verfahren ferner die folgenden Schritte umfasst, die für jeden interdigitalen kapazitiven Sensor nach dem Schritt des Bestimmens (38) eines maximalen Kapazitätswerts und eines minimalen Kapazitätswerts durchgeführt werden:
- Auswählen (40) einer gegebenen Anzahl von letzten durchschnittlichen Kapazitätswerten der Kurve, wobei die gegebene Anzahl zwischen 5 und 20 liegt und vorzugsweise gleich 10 ist,
- Berechnen (42) der Differenz zwischen dem minimalen Kapazitätswert und den ausgewählten Werten,
- Berechnen (42) der Differenz zwischen dem maximalen Kapazitätswert und den ausgewählten Werten,
- falls mindestens eine der Differenzen größer als die Abweichung (E) ist, kehrt das Verfahren zu dem Schritt des Messens (36) zurück,
- falls die Unterschiede geringer als die Abweichung (E) sind, wird das Verfahren mit dem Schritt des Berechnens (46) eines durchschnittlichen Kapazitätswerts fortgesetzt.

11. Bestimmungsverfahren nach Anspruch 10, wobei, wenn die Unterschiede geringer sind als die Abweichung (E), das Verfahren einen Schritt des Aufzeichnens (47) des durchschnittlichen Kapazitätswerts in der Kurve (C) umfasst.

12. Bestimmungsverfahren nach einem der Ansprüche 10 und 11, wobei die Kurve einen Kapazitätswert, der nach der Herstellung des Sitzes und vor der Installation in dem Fahrzeug gemessen wird, einen Kapazitätswert, der nach der Installation des Sitzes in dem Motorfahrzeug gemessen wird, und einen Kapazitätswert, der vor der ersten Verwendung gemessen wird, umfasst.

13. System (2) zum Bestimmen des Belegungsstatus eines Sitzes (4) in einem Kraftfahrzeug, das System umfassend:
- eine Sitz (4) für ein Kraftfahrzeug, einschließend:
- einen Sitzabschnitt (18), der eine Aufnahmefläche (22) zur Aufnahme einer Person aufweist, wobei die Aufnahmefläche (22) in eine vordere Zone (26) und eine hintere Zone (24) unterteilt ist, wobei die vordere Zone und die hintere Zone auf beiden Seiten einer transversalen Mittelebene (X-X) des Sitzabschnitts angeordnet sind,
- eine Rückenlehne (20) mit einer Aufnahmefläche (28) zur Aufnahme des Rückens einer Person, wobei die Rückenlehne (20) gelenkig mit dem Sitzabschnitt (18) verbunden ist, wobei die hintere Zone (24) der Aufnahmefläche des Sitzabschnitts an die Rückenlehne (20) angrenzt,
- nur drei interdigitale kapazitive Sensoren (6, 8, 10), die von der Aufnahmefläche (28) der Rückenlehne getragen werden, und nur drei interdigitale kapazitive Sensoren (12, 14, 16), die von der Aufnahmefläche (22) des Sitzteils getragen werden,
einen ersten interdigitalen kapazitiven Sensor (6), der an einer oberen und seitlichen Zone der Rückenlehnenaufnahmefläche (28) angeordnet ist,
wobei der zweite interdigitale kapazitive Sensor (8) in einer unteren Zone oder einer mittleren Zone der genannten Rückenlehnenaufnahmefläche angeordnet ist,
wobei der dritte interdigitale kapazitive Sensor (10) in einer seitlichen Zone der Rückenlehnenaufnahmefläche angeordnet ist,
wobei der dritte interdigitale kapazitive Sensor (10) an einer niedrigeren Position relativ zu dem zweiten kapazitiven Sensor angeordnet ist, wobei der zweite interdigitale kapazitive Sensor (8) seitlich zur Mitte hin relativ zu dem ersten und dritten interdigitalen kapazitiven Sensor versetzt ist,
wobei sich der vierte (12) interdigitale kapazitive Sensor an einem seitlichen Teil der hinteren Zone (24) der Sitzflächenaufnahmefläche angeordnet ist, wobei der fünfte interdigitale kapazitive Sensor (14) an einer hinteren oder mittleren Zone der Sitzflächenaufnahmefläche angeordnet ist, wobei der sechste interdigitale kapazitive Sensor (16) an einem seitlichen Teil der vorderen Zone der Sitzflächenaufnahmefläche angeordnet ist, wobei der fünfte interdigitale kapazitive Sensor (14) seitlich zur Mitte hin gegenüber dem vierten und sechsten interdigitalen kapazitiven Sensor versetzt ist, wobei der fünfte interdigitale kapazitive Sensor (14) längs zwischen dem vierten (12) und dem sechsten (16) interdigitalen kapazitiven Sensor angeordnet ist,
- eine Steuerung (100), die zur Durchführung des Verfahrens zum Bestimmen des Belegungsstatus eines Sitzes nach einem der Ansprüche 1 bis 12 geeignet ist.

14. Bestimmungssystem (2) nach Anspruch 13, wobei der zweite interdigitale kapazitive Sensor (8) seitlich in der Mitte der Sitzaufnahmefläche positioniert ist, und wobei der fünfte interdigitale kapazitive Sensor (14) seitlich in der Mitte der Aufnahmefläche positioniert ist.

## Claims

1. A method of determining the occupancy status of a seat (4) in a motor vehicle, the method being carried out by a determination system (2) including a seat (4), at least six interdigital capacitive sensors (6, 8, 10, 12, 14, 16) carried by the seat, and a controller (100) connected to the interdigital capacitive sensors, said controller including a memory (102) comprising a database (103), said database comprising at least one reference capacitance value and a threshold value for each interdigital capacitive sensor, the method comprising a step of measuring (36) at least three capacitance values for each interdigital capacitive sensor (6, 8, 10, 12, 14, 16), the following steps being carried out by the controller for the capacitance values measured by each interdigital capacitive sensor:
- calculating (46) an average capacitance value from at least two measured capacitance values,
- calculating (48) the difference between the average capacitance value and the reference capacitance value,
- comparing (49) the calculated difference with the threshold value,
- determining (50, 52, 56) the occupancy status of the seat on the basis of the result of said comparison.

2. The determination method according to claim 1, which further comprises a step of determining (38) a minimum capacitance value and a maximum capacitance value from the measured capacitance values, and wherein the step of calculating the average capacitance value is a step of calculating (46) an average capacitance value from the minimum capacitance value and the maximum capacitance value.

3. The determination method according to any of claims 1 and 2, wherein the database (103) further comprises first capacitance variation ranges (P1) defined for the interdigital capacitive sensors, each first variation range (P1) being defined for an interdigital capacitive sensor, the first variation ranges being representative of a status occupied by a human person,
and wherein the method further comprises for each interdigital capacitive sensor,
a step of comparing (54) the calculated difference with the first variation range (P1), the determined occupancy status (56) being a status occupied by a human person, when the differences calculated for each interdigital capacitive sensor lie within the first variation ranges (P1).

4. The determination method according to claim 3, wherein the database (103) further comprises at least two capacitance variation subdomains (D11, D12) defined for each interdigital capacitive sensor, each capacitance variation subdomain being representative of a morphological type of a person, and wherein the method comprises the following steps:
- comparing (58) the calculated differences with the at least two capacitance variation subdomains (D11, D12); and
- determining (60) a morphological type of the person sitting on the seat on the basis of the result of said comparison.

5. The determination method according to one of claims 1 and 2, wherein the database further comprises second capacitance variation ranges (P2) defined for the interdigital capacitive sensors, each second variation range (P2) being defined for a capacitance sensor, the second variation ranges (P2) being representative of a status occupied by a thing, an animal or a child,
and wherein the method further comprises, for each interdigital capacitive sensor, a step of comparing (62) the calculated difference with the second variation range (P2), the determined status of occupancy (64) being a status occupied by a thing, an animal or a child, when the average capacitance values calculated for each interdigital capacitive sensor lie within the second capacitance variation ranges.

6. The determination method according to claim 5, wherein the database further comprises at least two capacitance variation subdomains (D21, D22) defined for the interdigital capacitive sensors and respectively, each capacitance variation subdomain (D21, D22) being representative of a range of child age values, and wherein the method further comprises the following steps:
- comparing (66) the calculated differences with the at least two capacitance variation subdomains, and
- determining (68) a range of child age values on the basis of the result of the comparison.

7. The determination method according to any of claims 1 to 6, wherein the step of measuring (36) is carried out each time a motor vehicle door is opened or unlocked.

8. The determination method according to any of claims 1 to 6, wherein the step of measuring (36) is carried out each time a motor vehicle door is closed or locked.

9. The determination method according to any of claims 1 to 8, wherein the step of measuring (36) takes less than three seconds and preferably less than one second.

10. The determination method according to any of claims 1 to 9, wherein the memory comprises, for each interdigital capacitive sensor, a curve (C) representing average capacitance values as a function of time, and a determined deviation (E), and wherein the method further comprises the following steps carried out, for each interdigital capacitive sensor, after the step of determining (38) a maximum capacitance value and a minimum capacitance value:
- selecting (40) a given number of last average capacitance values of said curve, said given number being between 5 and 20, and preferably equal to 10,
- calculating (42) the difference between the minimum capacitance value and the selected values,
- calculating (42) the difference between the maximum capacitance value and the selected values,
- if at least one of said differences is greater than said deviation (E), the method returns to the step of measuring (36),
- if said differences are less than said deviation (E), the method continues with the step of calculating (46) an average capacitance value.

11. The determination method according to claim 10, wherein if said differences are less than said deviation (E), the method comprises a step of recording (47) the average capacitance value in said curve (C).

12. The determination method according to any of claims 10 and 11, wherein the curve includes a capacitance value measured after manufacture of the seat and before installation in the vehicle, a capacitance value measured after installation of the seat in the motor vehicle and a capacitance value measured before first use.

13. A system (2) for determining the occupancy status of a seat (4) in a motor vehicle, said system comprising:
- a seat (4) for a motor vehicle including:
- a seating portion (18) having a receiving face (22) for accommodating a person, the receiving face (22) being divided into a front zone (26) and a rear zone (24), the front zone and the rear zone being located on either side of a transverse central plane (X-X) of the seating portion,
- a backrest (20) having a receiving face (28) for accommodating the back of a person, the backrest (20) being hinged to the seating portion (18), the rear zone (24) of the receiving face of the seating portion being adjacent to the backrest (20),
- only three interdigital capacitive sensors (6, 8, 10) carried by the backrest receiving face (28), and only three interdigital capacitive sensors (12, 14, 16) carried by the seating portion receiving face (22),
a first interdigital capacitive sensor (6) being located on an upper and lateral zone of said backrest receiving face (28),
the second interdigital capacitive sensor (8) being located on a lower zone or a central zone of said backrest receiving face,
the third interdigital capacitive sensor (10) being located on a lateral zone of said backrest receiving face,
the third interdigital capacitive sensor (10) being located at a lower position relative to the second capacitive sensor, the second interdigital capacitive sensor (8) being offset laterally toward the center relative to the first and third interdigital capacitive sensors,
the fourth (12) interdigital capacitive sensor being located on a lateral part of the rear zone (24) of the seating portion receiving face, the fifth interdigital capacitive sensor (14) being located on a rear or central zone of the seating portion receiving face, the sixth interdigital capacitive sensor (16) being located on a lateral part of the front zone of the seating portion receiving face, the fifth interdigital capacitive sensor (14) being offset laterally toward the center relative to the fourth and sixth interdigital capacitive sensors, the fifth interdigital capacitive sensor (14) being located longitudinally between the fourth (12) and the sixth (16) interdigital capacitive sensors,
- a controller (100) suitable for carrying out the method of determining the occupancy status of a seat according to any of claims 1 to 12.

14. The determination system (2) according to claim 13, wherein the second interdigital capacitive sensor (8) is positioned laterally at the center of the seat receiving face, and wherein the fifth interdigital capacitive sensor (14) is positioned laterally at the center of the receiving face.
